# FASCICULE DE BREVET EUROPEEN

(11) **EP 2 588 758 B1**
(45) Date de publication et mention de la délivrance du brevet: **13.04.2016**
(21) Numéro de dépôt: 11738023.8
(22) Date de dépôt: 24.06.2011
(51) Int. Cl.: F04D 29/02, F04D 29/38, B64C 11/26, F01D 5/28

(54) **AUBE A LONGERON COMPOSITE INTÉGRÉ**
PROPELLERBLATT MIT INTEGRIERTEM VERBUNDHOLM
BLADE HAVING AN INTEGRATED COMPOSITE SPAR

(30) Priorité: 02.07.2010 FR 1055360
(43) Date de publication de la demande: 08.05.2013
(73) Titulaire: Snecma, 75015 Paris (FR)
(72) Inventeur: FABRE, Adrien, F-92120 Montrouge (FR); HORN, Nicolas, F-75005 Paris (FR); MARSAL, David, 33240 Saint André de Cubzac (FR); PERROLLAZ, Jean-Marc, F-77850 Hericy (FR)
(74) Mandataire: Desormiere, Pierre-Louis
(86) Numéro de dépôt international: PCT/FR2011/051474
(87) Numéro de publication internationale: WO 2012/001279

(56) Documents cités:
- FR-A1- 2 007 891
- US-A- 5 222 297
- US-A1- 2005 042 109
- "COMPOSITE MATERIALS IN PROPELLERS", AIRCRAFT ENGINEERING, BUNHILL PUBLICATIONS LTD. LONDON, GB, vol. 61, no. 11, 1 novembre 1989 (1989-11-01), pages 10-15, XP000125582,

## Description

### Arrière-plan de l'invention

La présente invention se rapporte au domaine des aubes telles que celles utilisées dans des soufflantes de turbopropulseurs ou destinées à former des pales d'hélice pour aéronefs.

Ces aubes sont généralement réalisées en matériau métallique. Si des aubes en matériau métallique ont une bonne résistance mécanique, elles présentent toutefois l'inconvénient d'avoir une masse relativement importante.

Afin d'obtenir des aubes plus légères, il est connu de réaliser des aubes en matériau composite, c'est-à-dire en réalisant au moins une partie des pièces de l'aube à partir d'un renfort fibreux densifié par une matrice résine.

La technique généralement utilisée consiste à former autour d'un noyau ou longeron, en matériau métallique intégrant également l'échasse et le pied d'aube, une peau par empilement de plis ou nappes unidirectionnels pré-imprégnés (drapage) sur le longeron, le tout étant ensuite placé dans un moule en orientant différemment les plis successifs, avant compactage et polymérisation à l'autoclave. Un exemple de réalisation d'une pale d'hélice selon cette technique est notamment décrite dans le document US 6 666 651.

Ce type de structure d'aubage se décompose en deux sous-structures, à savoir la peau qui correspond aux premiers millimètres de matière sous les surfaces intrados et extrados et le reste de la structure qui se compose essentiellement du longeron, de l'échasse et du pied d'aube. Le plus souvent, la peau assure uniquement le comportement aérodynamique et aéroélastique de l'aube tandis que le reste de la structure assure le comportement structural de l'aube (résistance à l'impact, aux survitesses, etc.).

Cependant ce type de structure n'est pas optimale en ce qu'il apparaît des concentrations de contraintes et des irrégularités de déformations entre la peau en matériau composite et le reste de la structure empêchant ainsi une transmission homogène des efforts exercés sur la peau vers le reste de la structure destiné à assurer le comportement structural de l'aube. Il est donc très difficile dans ce cas d'éviter la création dans l'aube de zones de faiblesse et d'obtenir, par conséquent, un comportement mécanique fiable.

Afin d'améliorer notamment la tenue à l'impact et de réduire les risques de délaminage dans les aubes composites, des aubes ont été fabriquées par tissage tridimensionnel d'une préforme fibreuse et densification de la préforme par une matrice organique comme décrit dans le document EP 1 526 285. Ce procédé permet d'obtenir des aubes ayant une résistance mécanique très élevée. Toutefois, suivant cette technique, l'intégralité de la structure de l'aube, à savoir la peau et le reste de la structure (longeron, échasse et pied) est réalisée à partir d'un seul et même renfort fibreux tissé en continu mais en variant les armures en fonction des parties de l'aube à réaliser.

Ce type de fabrication ne permet pas de dissocier structurellement la peau du reste de la structure de l'aube, ce qui réduit la capacité d'aménagement à l'intérieur de l'aube comme par exemple l'intégration de canaux de refroidissement, d'éléments de dégivrage et/ou d'introduction de matériau basse densité afin d'alléger la masse globale de l'aube.

Du document US 5 222 297 on connait une structure d'aube qui peut être décomposée en deux parties.

### Objet et résumé de l'invention

Il est donc souhaitable de pouvoir disposer d'aubes dont la structure peut être décomposée au moins en deux parties tout en ayant un comportement mécanique fiable.

A cet effet, selon l'invention, il est proposé une aube comprenant:
- une structure à profil aérodynamique comprenant deux peaux en vis-à-vis obtenues par tissage tridimensionnel d'un renfort fibreux densifié par une matrice,
- un longeron constitué d'un renfort fibreux obtenu par tissage tridimensionnel densifié par une matrice, ledit longeron comprenant une première partie s'étendant à l'extérieur de ladite structure à profil aérodynamique et destinée à être reliée à un moyeu d'entraînement en rotation de la pale et une deuxième partie disposée à l'intérieur de la structure à profil aérodynamique entre les deux peaux,
la deuxième partie dudit longeron ayant principalement une épaisseur sensiblement similaire à celle des peaux de la structure à profil aérodynamique, et
le renfort fibreux de la deuxième partie du longeron ayant une même armure de tissage que celle du renfort des peaux de la structure à profil aérodynamique.

L'aube de l'invention présente une structure dissociant la peau du reste de l'aube, à savoir au moins le longeron, tout en assurant une transmission des efforts homogène entre ces éléments.

En effet, puisque le longeron comprend un renfort tridimensionnel ayant la même armure que les peaux de la structure à profil aérodynamique et présente une épaisseur similaire à celle des peaux dans sa deuxième partie, à savoir sa partie supérieure située au-dessus de l'échasse et du pied d'aube, on assure ainsi une transmission efficace et homogène des efforts entre la structure à profil aérodynamique et le longeron sans zones de concentration de contraintes ou de déformations. Ainsi, le longeron suivra les mouvements des peaux de la structure à profil aérodynamique sans s'y opposer, c'est-à-dire sans engendrer de sur-contraintes, ce qui ne serait pas possible avec un longeron ayant une structure différente de celle des peaux ou réalisé avec un matériau présentant des raideurs différentes de celles des peaux. Dans la partie de l'aube commune à celle des peaux et de la deuxième partie du longeron, les peaux et le longerons présentent des raideurs similaires.

Selon un aspect de l'invention, la première partie du longeron s'étend en dessous de la deuxième partie du longeron suivant une épaisseur croissante. Ainsi, la première partie du longeron présente une épaisseur croissante à partir de sa jonction avec la deuxième partie du longeron et jusqu'à son extrémité libre constituant le pied de l'aube. Cette augmentation d'épaisseur du longeron en dehors des peaux permet une reprise par ce dernier des efforts exercés sur l'aube au niveau de son pied.

Selon un autre aspect de l'invention la variation d'épaisseur entre l'épaisseur des peaux et l'épaisseur de la deuxième partie du longeron est inférieure à 40%.

Selon un mode de réalisation de l'invention, la deuxième partie du longeron comprend deux portions symétriques, l'une disposée en regard d'une des deux peaux de la structure à profil aérodynamique et l'autre disposée en regard de l'autre peau, chaque portion symétrique ayant une épaisseur sensiblement similaire à celle de la peau adjacente de la structure à profil aérodynamique.

En divisant ainsi la deuxième partie du longeron, on confère à cette dernière une topologie de type "double peau" qui permet de former des peaux d'épaisseur réduite par rapport à la partie restante du longeron qui est monolithique et de pouvoir ainsi se rapprocher au mieux de l'épaisseur des peaux de la structure à profil aérodynamique.

Selon un aspect de l'invention, une pièce de conformation en matériau rigide alvéolé est en outre disposée entre les deux portions symétriques de la deuxième partie du longeron, ce qui permet de faciliter la mise en forme et d'alléger la masse globale de l'aube.

Selon un autre mode de réalisation, la deuxième partie du longeron comporte deux branches espacées l'une de l'autre par un évidement central et ayant chacune une épaisseur sensiblement similaire à celle des peaux de la structure à profil aérodynamique.

De même que pour la topologie "double peau" évoquée ci-dessus, la deuxième partie du longeron présente une topologie essentiellement non monolithique, cette partie étant divisée en deux branches qui suivront les mouvements des peaux de la structure à profil aérodynamique sans engendrer de sur-contraintes.

Une pièce de conformation en matériau rigide alvéolé est disposée dans l'évidement central afin de faciliter la mise en forme et d'alléger la masse globale de l'aube.

L'aube de l'invention peut être destinée à être intégrée dans un turbopropulseur, par exemple en tant qu'aube de soufflante, ou à former une pale d'hélice d'aéronef.

L'invention vise aussi un procédé de fabrication d'une aube comprenant au moins:
- la réalisation d'une première ébauche fibreuse d'une structure à profil aérodynamique par tissage tridimensionnel de fils, ladite ébauche comprenant deux peaux délimitant entre elles un espace interne,
- la réalisation d'une deuxième ébauche fibreuse d'un longeron par tissage tridimensionnel de fils, ladite deuxième ébauche comprenant une première et une deuxième portions, la deuxième portion ayant principalement une épaisseur sensiblement égale à celle des peaux de la première ébauche et une armure identique à celle desdites peaux,

- la mise en forme de la première ébauche fibreuse pour obtenir une préforme de structure à profil aérodynamique, ladite mise en forme comprenant la disposition de la deuxième partie de la deuxième ébauche dans l'espace interne entre les deux peaux de la première ébauche fibreuse,
- la densification des première et deuxième ébauches par une matrice pour obtenir une aube comprenant une structure à profil aérodynamique et un longeron ayant chacun un renfort fibreux densifié par la matrice.

Selon un mode mise en oeuvre du procédé de l'invention, lors de la réalisation de la deuxième ébauche fibreuse du longeron, la deuxième portion de ladite deuxième ébauche fibreuse est divisée en deux parties symétriques dans le sens de l'épaisseur de ladite deuxième portion, chaque partie symétrique ayant une épaisseur sensiblement similaire à celle de la peau de la première ébauche fibreuse avec laquelle elle est destinée à être en regard lors de la mise en forme de la première ébauche fibreuse.

Dans ce cas, lors de la mise en forme de la première ébauche fibreuse, au moins une pièce de conformation en matériau rigide alvéolé est disposée entre les deux parties symétriques de ladite deuxième portion.

Selon un autre mode de mise en oeuvre de l'invention, lors de la réalisation de la deuxième ébauche fibreuse du longeron, un évidement central est ménagé dans la deuxième portion de ladite deuxième ébauche fibreuse, ledit évidement délimitant deux parties espacées l'une de l'autre par l'évidement central et ayant chacune une épaisseur sensiblement similaire à celle des peaux de la structure à profil aérodynamique.

Dans ce cas, lors de la mise en forme de la première ébauche fibreuse, au moins une pièce de conformation en matériau rigide alvéolé est disposée dans l'évidement central.

Selon un aspect de l'invention, la première portion de la deuxième ébauche fibreuse comprend en outre une partie renflée prolongée par une partie d'épaisseur décroissante vers la deuxième portion de la deuxième ébauche, lesdites partie renflée et partie d'épaisseur décroissante formant respectivement, après densification, un pied et une échasse d'aube.

Les renforts fibreux du longeron et des peaux peuvent être réalisées avec des fibres de même nature ou de nature différentes. De même les matrices utilisées pour densifier les renforts fibreux du longeron et des peaux peuvent être de même nature ou de différentes nature.

L'invention a également pour objet un turbopropulseur équipé d'une aube ou pale d'hélice selon l'invention.

L'invention vise encore un aéronef équipé d'au moins un turbopropulseur selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'une pale d'hélice d'aéronef conformément à un mode de réalisation de l'invention,
- la figure 2 est une vue en perspective d'un turbopropulseur équipé d'une pluralité de pales d'hélice selon l'invention,
- la figure 3 est une vue schématique illustrant le tissage 3D d'une ébauche fibreuse pour la fabrication d'une structure à profil aérodynamique de la pale d'hélice de la figure 1,
- les figures 4A et 4B sont des vues en coupe partielles à échelle agrandie d'un ensemble de couches de fils formant l'ébauche de la figure 1,
- la figure 5 est une vue schématique illustrant le tissage 3D d'une ébauche fibreuse pour la fabrication d'un longeron de la pale d'hélice de la figure 1,
- la figure 6 est une vue éclatée montrant la réalisation de la pale d'hélice de la figure 1,
- la figure 7 est une vue en coupe trame montrant un exemple de disposition de fils de trame dans une partie d'ébauche fibreuse correspondant à une partie de pied de pale,
- les figures 8 et 9 sont des vues en coupe de la pale d'hélice de la figure 1,
- la figure 10 est une vue en perspective d'une pale d'hélice d'aéronef conformément à un autre mode de réalisation de l'invention,
- la figure 11 est une vue schématique illustrant le tissage 3D d'une ébauche fibreuse pour la fabrication d'un longeron de la pale d'hélice de la figure 10,
- la figure 12 est une vue éclatée montrant la réalisation de la pale d'hélice de la figure 10,
- les figures 13 et 14 sont des vues en coupe de la pale d'hélice de la figure 10,
- la figure 15 est une vue en perspective d'une pale d'hélice d'aéronef conformément à un autre mode de réalisation de l'invention,
- la figure 16 est une vue schématique illustrant le tissage 3D d'une ébauche fibreuse pour la fabrication d'une structure à profil aérodynamique de la pale d'hélice de la figure 15,
- la figure 17 est une vue schématique illustrant le tissage 3D d'une ébauche fibreuse pour la fabrication d'un longeron de la pale d'hélice de la figure 15,
- la figure 18 est une vue éclatée montrant la réalisation de la pale d'hélice de la figure 15,
- les figures 19 et 20 sont des vues en coupe de la pale d'hélice de la figure 15.

### Description détaillée de modes de réalisation

L'invention s'applique d'une manière générale à différents types d'aubes telles que des aubes de soufflante ou pales d'hélices utilisées dans des moteurs d'aéronefs tels que des avions ou des hélicoptères. L'invention trouve une application avantageuse mais non exclusive dans des pales d'hélice de grandes dimensions qui, en raison de leur taille, présentent une masse importante ayant un impact significatif sur le comportement mécanique des pales et la masse globale du moteur de l'aéronef.

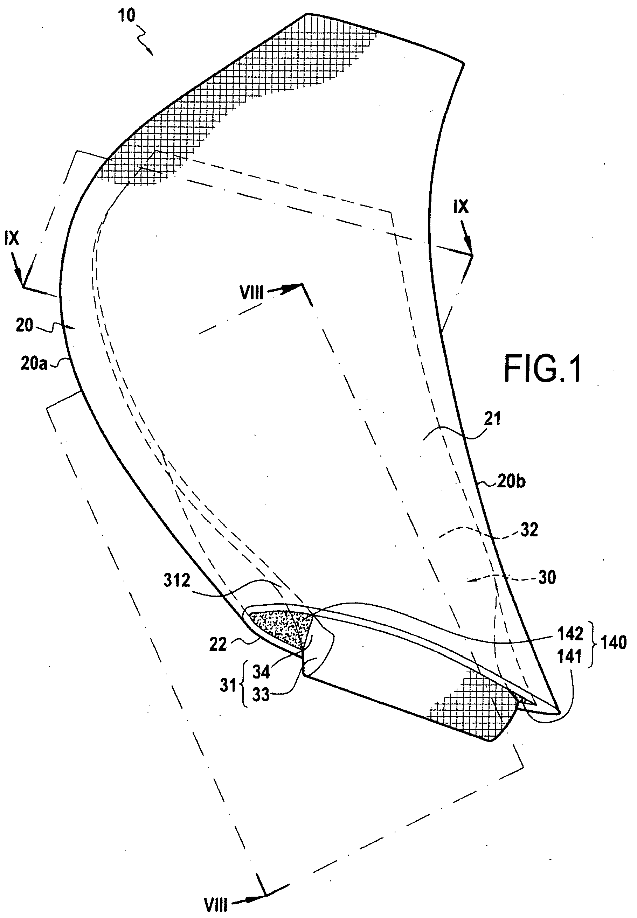

La figure 1 représente une pale d'hélice 10 destinée à être montée sur un turbopropulseur d'avion qui comprend, de façon en soi bien connue, une structure à profil aérodynamique 20 destinée à former la partie aérodynamique de la pale, un pied 33 formé par une partie de plus forte épaisseur, par exemple à section en forme de bulbe, prolongé par une échasse 34. La structure à profil aérodynamique 20 présente en section transversale un profil incurvé d'épaisseur variable entre son bord d'attaque 20a et son bord de fuite 20b. Conformément à l'invention, la pale d'hélice 10 comprend un longeron 30 comprenant une première partie 31 s'étendant à l'extérieur de la structure à profil aérodynamique 20 est comportant le pied 33 et l'échasse 34 et une deuxième partie 32 disposée à l'intérieur de la structure à profil aérodynamique 20.

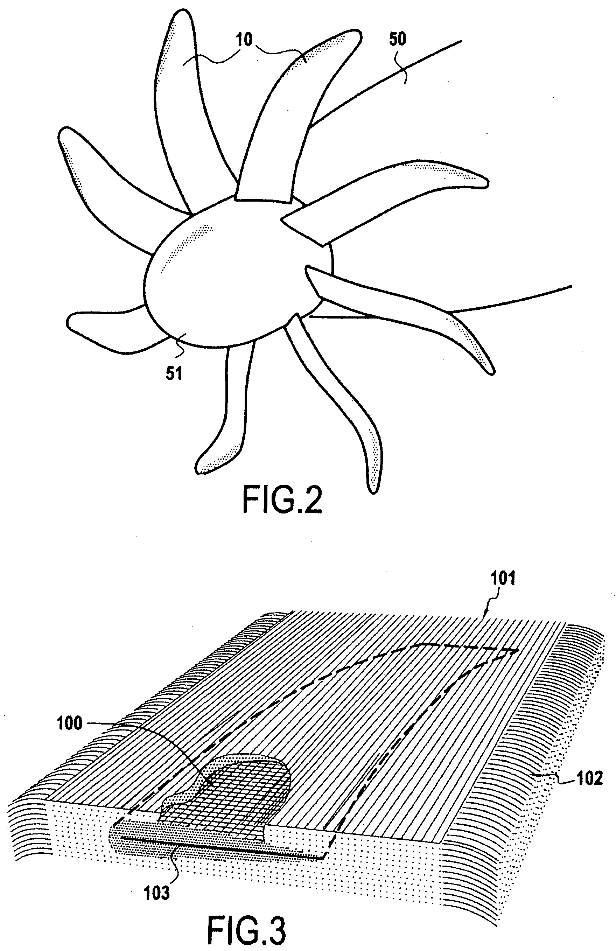

Comme illustré sur la figure 2, la pale 10 est montée sur un rotor 51 de turbopropulseur 50 par engagement du pied 33 dans un logement aménagé à la périphérie du rotor 51 (non représenté sur la figure 2).

La figure 3 montre très schématiquement une ébauche fibreuse 100 destinée à former la préforme fibreuse de la structure à profil aérodynamique de la pale.

L'ébauche fibreuse 100 est obtenue, comme illustrée schématiquement sur la figure 3, par tissage tridimensionnel (3D) réalisé de façon connue au moyen d'un métier à tisser de type jacquard sur lequel on a disposé un faisceau de fils de chaînes 101 ou torons en une pluralité de couches de plusieurs centaines de fils chacune, les fils de chaînes étant liés par des fils de trame 102.

Dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755.

L'ébauche fibreuse selon l'invention peut être tissée à partir de fils de fibre de carbone ou de céramique tel que du carbure de silicium.

Au fur et à mesure du tissage de l'ébauche fibreuse dont l'épaisseur et la largeur varient, un certain nombre de fils de chaîne ne sont pas tissés, ce qui permet de définir le contour et l'épaisseur voulue, continûment variable, de l'ébauche 100. Un exemple de tissage 3D évolutif permettant notamment de faire varier l'épaisseur de l'ébauche entre un premier bord destiné à former le bord d'attaque et un deuxième bord d'une épaisseur moindre et destiné à former le bord de fuite est décrit dans le document EP 1 526 285.

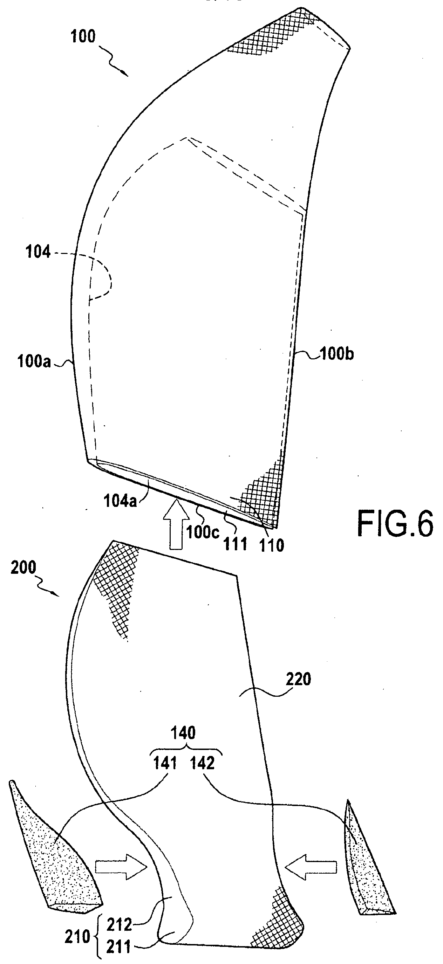

Lors du tissage, une déliaison 103 (figure 3) est réalisée à l'intérieur de l'ébauche fibreuse entre deux couches successives de fils de chaîne et sur une zone de déliaison 104 (figure 6). La zone de déliaison 104 permet de ménager une cavité 104a permettant l'introduction d'un longeron, et éventuellement d'une ou plusieurs pièces de conformation, à l'intérieur de l'ébauche fibreuse 100 en vue de la formation de la préforme de la structure à profil aérodynamique.

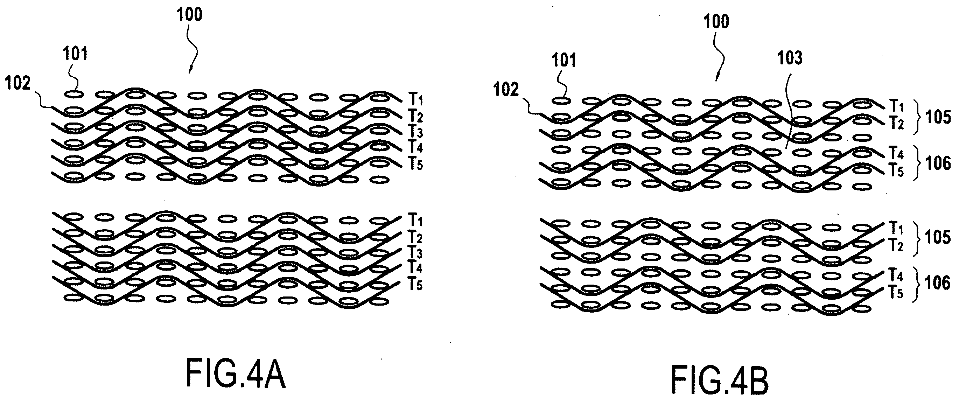

Un mode de tissage 3D à armure interlock de l'ébauche 100 est montré schématiquement par les figures 4A et 4B. La figure 4A est une vue partielle agrandie de deux plans en coupe chaîne successifs dans une partie de l'ébauche 100 ne présentant pas de déliaison, c'est-à-dire dans une zone de l'ébauche située en dehors de la zone de déliaison 104, tandis que la figure 4B montre deux plans en coupe chaîne successifs dans la partie de l'ébauche 100 présentant une déliaison 103 formant la zone de déliaison 104.

Dans cet exemple, l'ébauche 100 comprend 6 couches de fils de chaîne 101. Sur la figure 4A, les 6 couches de fils de chaîne sont liés par des fils de trame T₁ à T₅. Sur la figure 4B, 3 couches de fils de chaîne 101 formant l'ensemble de couches de fils 105 sont liées entre elles par deux fils de trame T₁, T₂, de même que les 3 couches de fils de chaîne formant l'ensemble de couches de fils 106 sont liés par deux fils de trame T₄ et T₅. En d'autres termes, le fait que les fils de trame T₁, T₂ ne s'étendent pas dans les couches de fils 106 et que les fils de trame T₄, T₅ ne s'étendent pas dans les couches de fils 105 assure la déliaison 103 qui sépare l'un de l'autre les ensembles de couches de fils de chaîne 105, 106.

A la fin du tissage (figure 3), on sectionne, par exemple au jet d'eau sous pression, les fils de chaîne et de trame à la limite de la masse tissée pour extraire l'ébauche 100 représentée sur la figure 6 telle qu'elle est issue du tissage 3D et avant toute conformation. La zone de déliaison 104 ménagée lors du tissage permet de former deux portions 110 et 111 tissées indépendamment l'une de l'autre délimitant une cavité 104a à l'intérieur de l'ébauche 100. Les deux portions 110 et 111 sont destinées à former les peaux 21 et 22 de la structure aérodynamique 20. La cavité 104a est ouverte sur le bord inférieur 100c et sur le bord arrière 100b de l'ébauche 100. Le bord arrière 100b de l'ébauche 100 correspond à la partie destinée à former le bord de fuite 20b de la structure à profil aérodynamique 20 (figure 1).

Le bord avant 100a de l'ébauche fibreuse 100, qui relie des deux portions 110 et 111 et qui est destiné à former le bord d'attaque 20a de la structure à profil aérodynamique de la pale d'hélice, ne comporte pas de déliaison. En reliant les deux portions 110 et 111 par un tissage continu au niveau du bord avant 100a, la structure à profil aérodynamique de la pale d'hélice comporte un renfort fibreux homogène au niveau du bord d'attaque afin de renforcer sa résistance vis-à-vis d'éventuels impacts.

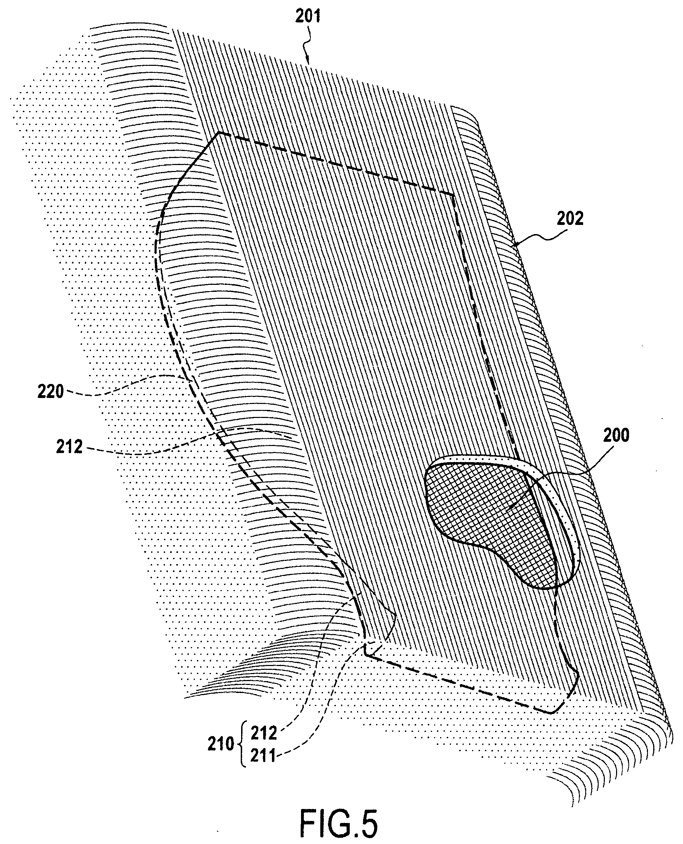

La figure 5 montre très schématiquement une ébauche fibreuse 200 destinée à former la préforme fibreuse du longeron de la pale d'hélice.

De même que pour l'ébauche fibreuse 100 décrite ci-avant, l'ébauche fibreuse 200 est obtenue, comme illustrée schématiquement sur la figure 5, par tissage tridimensionnel réalisé de façon connue au moyen d'un métier à tisser de type jacquard sur lequel on a disposé un faisceau de fils de chaînes 201 ou torons en une pluralité de couches de plusieurs centaines de fils chacune, les fils de chaînes étant liés par des fils de trame 202.

L'ébauche fibreuse 200 comprend une première portion 210 et une deuxième portion 220. La première portion 210 comportant une partie renflée 211 et une partie d'épaisseur décroissante 212 destinées à former respectivement le pied 33 et l'échasse 34 de la pale d'hélice 10 (figure 1). L'échasse 34 est prolongée par une deuxième portion 220 destinée à former la deuxième partie 32 du longeron 30.

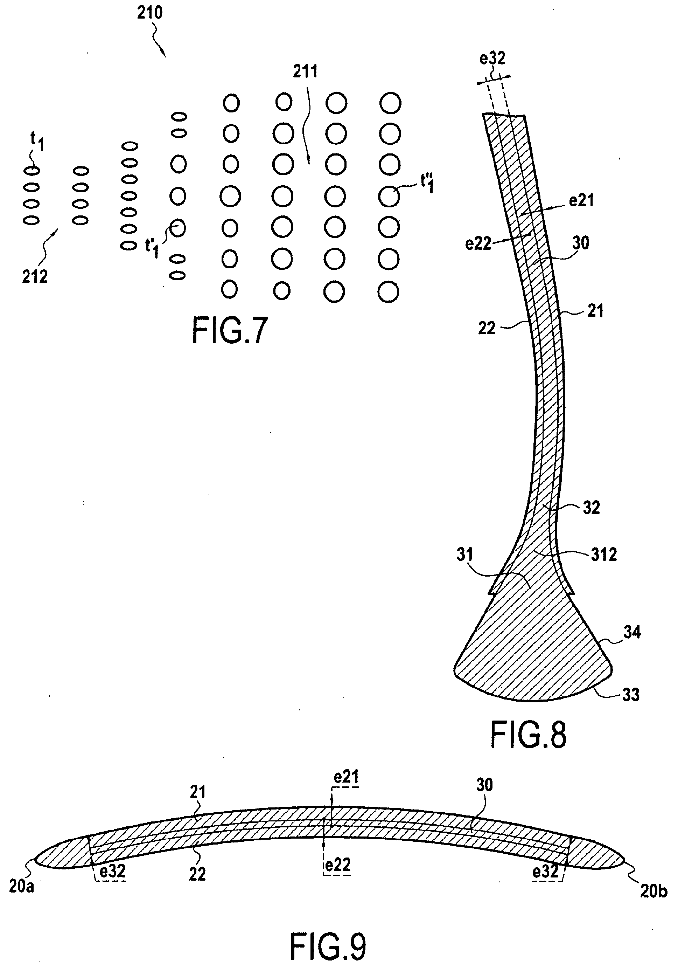

Lors du tissage de l'ébauche fibreuse 200 du longeron 30, la partie renflée 211 peut être obtenue en utilisant des fils de trame de plus gros titre et des couches supplémentaire de fils de trame comme le montre par exemple la figure 7.

Sur la figure 7, le nombre de fils de trame passe dans cet exemple de 4 à 7 entre la partie 212 de la bande de l'ébauche fibreuse, correspondant à l'échasse de la pale d'hélice, et la partie renflée 211 de la bande correspondant au pied de la pale. En outre des fils de trame t1, t'1, t"1 de titres différents (croissants) sont utilisés. On peut, en variante ou en complément, faire varier la contexture des fils de chaîne (nombre de fils par unité de longueur en sans trame).

Selon une variante de réalisation, la partie renflée 211 peut être obtenue en introduisant un insert lors du tissage de la bande de l'ébauche fibreuse du longeron. Cet insert peut notamment être réalisé en titane ou avec le même matériau que celui de la matrice du matériau composite de la poutre.

La deuxième portion 220 prolonge la partie d'épaisseur décroissante 212 et présente une forme sensiblement plane.

Conformément à l'invention, l'ébauche fibreuse 200 est tissée de manière à présenter, au moins dans la deuxième portion 220 destinée à être disposée entre les deux peaux 110 et 111 de l'ébauche fibreuse 100, une structure textile identique à celle des deux peaux 110 et 111. Plus précisément, l'ébauche 200 est tissée suivant une armure et avec une orientation des fils de chaîne et de trame identiques à celles utilisées pour le tissage des peaux 110 et 111.

A titre d'exemple, si l'ébauche fibreuse 100 est tissée suivant un tissage à armure "interlock", l'ébauche fibreuse 200 sera également tissée suivant cette même armure "interlock" en utilisant pour les deux ébauches 100 et 200 les mêmes couches de fils de trame pour lier les mêmes couches de fils de chaîne.

En outre, la deuxième portion 220 présente dans sa majeure partie une épaisseur sensiblement identique à celles des peaux 110 et 111.

A la fin du tissage (figure 5), on sectionne, par exemple au jet d'eau sous pression, les fils de chaîne et de trame à la limite de la masse tissée pour extraire l'ébauche 200 représentée sur la figure 6 telle qu'elle est issue du tissage 3D.

Sur la figure 6, la conformation de l'ébauche fibreuse 100 en une préforme de la structure à profil aérodynamique, est réalisée en introduisant dans la cavité 104a la deuxième portion 220 et une pièce de conformation en matériau rigide 140 constituée ici de deux éléments complémentaire 141 et 142. Afin de conformer l'ébauche 100 sans augmenter significativement la masse globale de la structure à profil aérodynamique de la pale d'hélice, la pièce 140 est en matériau rigide alvéolé, c'est-à-dire un matériau présentant une faible densité. La pièce de conformation, ou plus précisément dans l'exemple décrit ici les éléments 141 et 142, peuvent être réalisés par moulage ou par usinage dans un bloc de matériau. La pièce de conformation 140 est utilisée lorsque la deuxième portion 220 ne présente pas une forme et/ou un volume suffisant pour mettre en forme l'ébauche fibreuse 100.

Une fois la deuxième portion 220 de l'ébauche fibreuse 200 et les éléments 141 et 142 dans la cavité 104a, on procède à la densification de la préforme fibreuse ainsi constituée. Le bord arrière 100b de l'ébauche est de préférence refermé par couture avant la densification.

La densification de la préforme fibreuse peut être réalisée en une seule opération, c'est-à-dire en densifiant en même temps les ébauches fibreuses 100 et 200 une fois assemblées. Dans ce cas, les ébauches fibreuses 100 et 200 sont densifiées avec la même matrice.

Selon une variante de réalisation de l'invention, l'ébauche fibreuse 200 peut être densifiée seule avec une première matrice puis être introduite dans la cavité 104a de l'ébauche fibreuse 100 comme décrit ci-avant, l'ébauche fibreuse 100 étant alors densifiée avec une deuxième matrice qui peut-être de nature différente de celle de la première matrice.

Par ailleurs, les première et deuxième ébauches fibreuses 100 peuvent être réalisées avec des fils constitués de fibres de même nature ou de nature différente.

La densification de la préforme fibreuse consiste à combler la porosité de la préforme, dans tout ou partie du volume de celle-ci, par le matériau constitutif de la matrice.

La matrice du matériau composite constituant la structure à profil aérodynamique peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme est placée dans un moule pouvant être fermé de manière étanche avec un logement ayant la forme de la pièce finale moulée et pouvant notamment présenter une forme vrillée correspondant à la forme définitive de la structure à profil aérodynamique. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la structure à profil aérodynamique. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PICS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place les préformes fibreuses 100 et 200, avec la deuxième portion 220 de l'ébauche 200 et les éléments 141 et 142 disposés à l'intérieur de l'ébauche 100 comme expliqué précédemment, dans un moule présentant la forme extérieure de la structure à profil aérodynamique. La deuxième portion 220 et les éléments 141 et 142 ayant une forme correspondant à celle de la structure à profil aérodynamique à réaliser, ils jouent avantageusement le rôle de contre-moule. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés. Aucun autre usinage n'est nécessaire puisque, la pièce étant moulée, elle respecte les cotes exigées.

Le matériau rigide alvéolé utilisé pour réaliser les éléments 141 et 142 constitutifs de la pièce de conformation 140 est de préférence un matériau à alvéoles fermées de manière à empêcher la pénétration de la résine dans celui-ci et conserver, ainsi, sa faible densité après densification de la préforme fibreuse.

Après densification de la préforme fibreuse de la structure à profil aérodynamique, on obtient telle que représentée sur la figure 1, une pale d'hélice 10 qui comprend une structure à profil aérodynamique 20 en matériau composite (renfort fibreux densifié par une matrice), un longeron 30 et une pièce de conformation 140 en matériau rigide alvéolé.

Conformément à l'invention et comme illustrée sur les figures 8 et 9, la deuxième partie 32 du longeron 30 présente principalement, c'est-à-dire dans sa partie située au-delà d'une zone de transition 312 commune aux première et deuxième parties 31 et 32 permettant de réduire progressivement l'épaisseur entre ces deux parties, une épaisseur e32 sensiblement identique à l'épaisseur e21 ou e22 respectivement des peaux e21 ou e22 de la structure à profil aérodynamique 20.

Plus précisément, dans le mode de réalisation décrit ici, les peaux 21 et 22 présentent des épaisseurs e21 ou e22 qui s'accroissent progressivement entre la partie basse de l'aube (au niveau de la première partie 31) et le sommet de l'aube pour présenter une épaisseur en sommet d'aube légèrement supérieure à celle du longeron. A l'inverse, la deuxième partie 32 du longeron 30 présente une épaisseur e32 qui s'accroît entre le sommet de l'aube et la zone de transition 312 afin de permettre une reprise progressive des efforts par le longeron à la base de l'aube (i.e. pied d'aube).

Conformément à l'invention, la variation d'épaisseur entre les épaisseurs e21 et e22 des peaux 21 et 22 et l'épaisseur e32 de la deuxième partie 32 du longeron n'excède pas 40%.

En outre, le renfort fibreux de la deuxième partie 32 du longeron et le renfort fibreux des peaux 21 et 22 de la structure à profil aérodynamique présentent la même structure textile, à savoir la même nature et orientation d'armure.

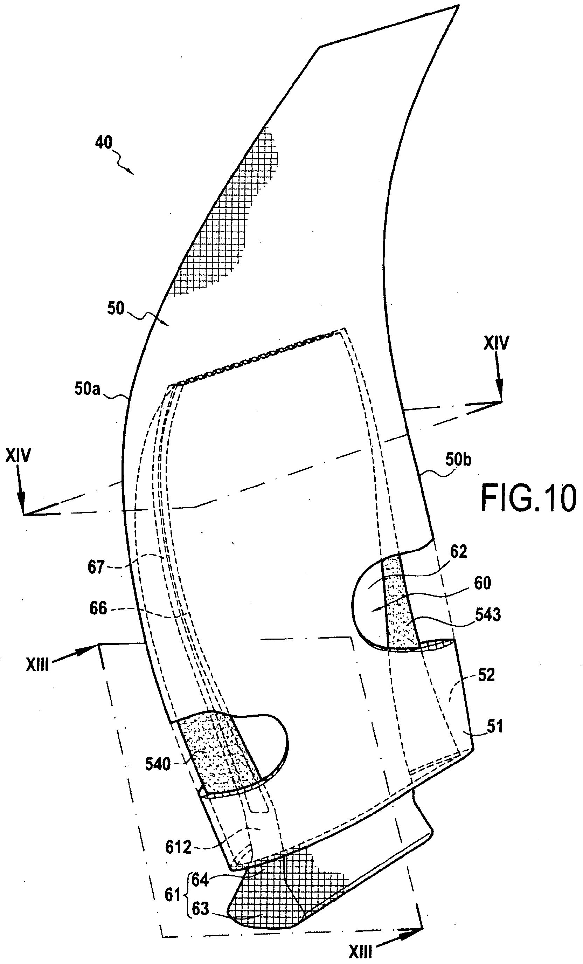

La figure 10 montre un autre mode de réalisation d'une pale d'hélice d'aéronef 40 selon l'invention qui diffère de celui décrit en relation avec les figures 1 à 9 en ce que le longeron 60 comporte dans sa deuxième partie 62 destinée à être disposée à l'intérieur d'une structure à profil aérodynamique 50 une structure de type "double peau".

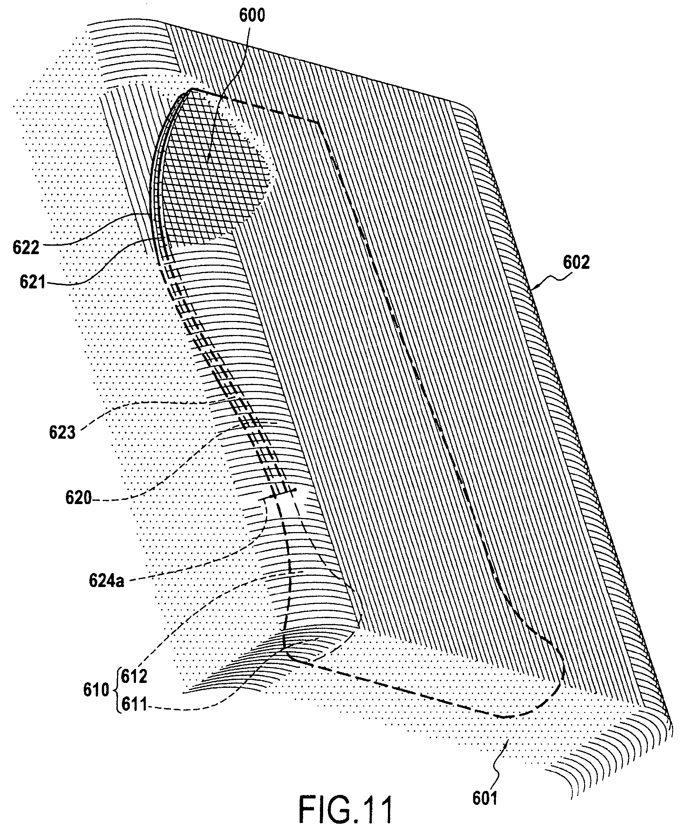

Plus précisément et comme représenté sur la figure 11, le longeron 60 est réalisé à partir d'une ébauche fibreuse 600 obtenue par tissage tridimensionnel de fils de chaînes 601 avec des fils de trame 602 réalisé de façon connue comme expliqué précédemment.

L'ébauche fibreuse 600 comprend une première portion 610 et une deuxième portion 620, la première portion 610 comportant une partie renflée 611 et une partie d'épaisseur décroissante 612 destinées à former respectivement le pied 63 et l'échasse 64 de la pale d'hélice 40 (figure 10). Le première portion 610 prolongée par une deuxième portion 620 destinée à former la deuxième partie 62 du longeron 60. La partie renflée 611 peut être obtenue en jouant sur le titre des fils de trame et le nombre de couches supplémentaires de fils de trame comme expliqué ci-avant en relation avec la figure 7 ou en introduisant un insert lors du tissage de la bande de l'ébauche fibreuse du longeron.

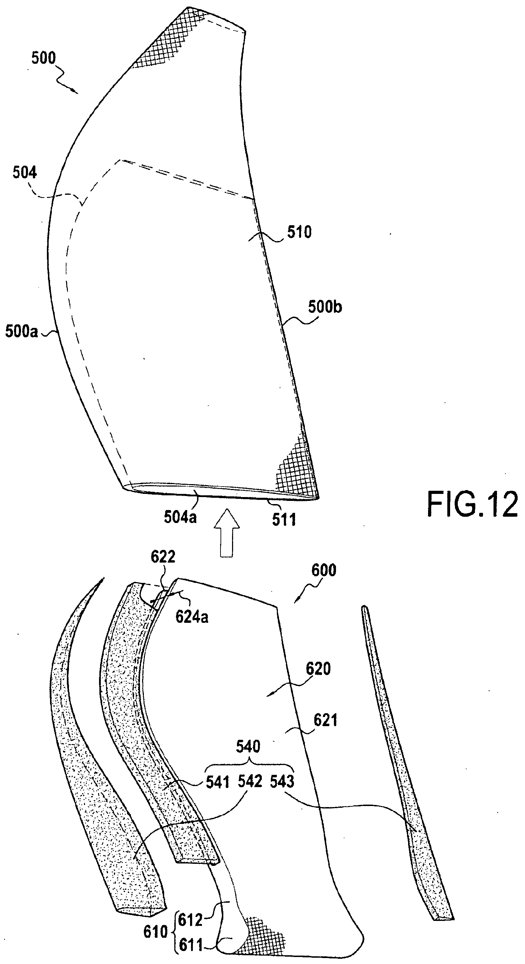

La deuxième portion 620 est divisée en deux parties symétriques 621 et 622 formant deux peaux espacées l'une de l'autre. A cet effet, lors du tissage de l'ébauche 600, une déliaison 623 est réalisée à l'intérieur de l'ébauche fibreuse entre plusieurs couches successives de fils de chaîne (figure 11). La zone de déliaison permet de ménager un espace de séparation 624a entre les deux parties symétriques 621 et 622 (figure 12). L'étendue de déliaison 623 ainsi que son épaisseur définissant l'espace 624a entre les deux parties symétriques 621 et 622 est par exemple déterminée par le nombre de couches de fils de chaîne qui ne sont pas traversés par des fils de trame dans le cas, par exemple, d'un tissage 3D à armure interlock comme décrit ci-avant en relation avec la figure 4B.

A la fin du tissage (figure 11), on sectionne, par exemple au jet d'eau sous pression, les fils de chaîne et de trame à la limite de la masse tissée pour extraire l'ébauche 600 représentée sur la figure 12 telle qu'elle est issue du tissage 3D.

La figure 12 montre l'ébauche fibreuse 500 destinée à constituer le renfort fibreux de la structure à profil aérodynamique 50. L'ébauche fibreuse est obtenue par tissage 3D de la même façon que décrit précédemment et illustré sur la figure 3. L'ébauche fibreuse 500 comprend une cavité 504a obtenue par création d'une zone de déliaison 504 lors du tissage comme déjà décrit pour l'ébauche 100, cette cavité délimitant deux portions 510 et 511 tissées indépendamment l'une de l'autre et destinées à former les peaux 51 et 52 de la structure aérodynamique 50. Le bord arrière 500b de l'ébauche 500 correspond à la partie destinée à former le bord de fuite 50b de la structure à profil aérodynamique 50 (figure 10). Le bord avant 500a de l'ébauche fibreuse 100, qui relie des deux portions 510 et 511 et qui est destiné à former le bord d'attaque 50a de la structure à profil aérodynamique de la pale d'hélice, ne comporte pas de déliaison afin de renforcer sa résistance vis-à-vis d'éventuels impacts.

Conformément à l'invention, l'ébauche 600, et plus particulièrement les deux parties symétriques 621 et 622, présentent une structure textile identique à celle des deux portions 510 et 511, à savoir une armure et une orientation des fils de chaîne et de trame identiques à celles utilisées pour le tissage des portions 510 et 511.

En outre, les deux parties symétriques 621 et 622 présentent une épaisseur sensiblement identique à celles des portions 510 et 511.

Sur la figure 12, la conformation de l'ébauche fibreuse 500 en une préforme de la structure à profil aérodynamique, est réalisée en introduisant dans la cavité 504a la deuxième portion 620 de l'ébauche 600 et une pièce de conformation en matériau rigide 540 constituée ici de trois éléments complémentaires 541, 542 et 543 en matériau rigide alvéolé, c'est-à-dire un matériau présentant une faible densité. La pièce de conformation, ou plus précisément dans l'exemple décrit ici les éléments 541 à 543, peuvent être réalisés par moulage ou par usinage dans un bloc de matériau.

Une fois la deuxième portion 620 de l'ébauche fibreuse 600 et les éléments 541, 542 et 543 dans la cavité 504a, on procède à la densification de la préforme fibreuse de la structure à profil aérodynamique comme décrit précédemment par un procédé RTM ou autre. Le bord arrière 500b de l'ébauche est de préférence refermé par couture avant la densification.

Après densification de la préforme fibreuse de la structure à profil aérodynamique, on obtient telle que représentée sur la figure 10, une pale d'hélice 40 qui comprend une structure à profil aérodynamique 50 en matériau composite (renfort fibreux densifié par une matrice), un longeron 60 et une pièce de conformation 540 en matériau rigide alvéolé.

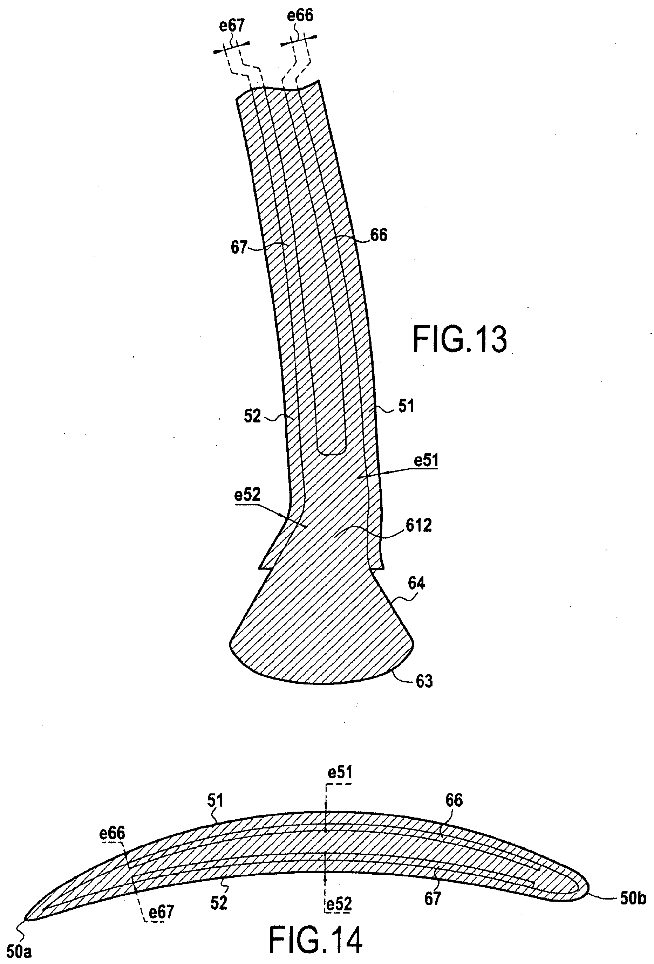

Conformément à l'invention et comme illustrée sur les figures 10, 13 et 14, la deuxième partie 62 du longeron 60 présente dans sa majeure partie, c'est-à-dire dans sa partie située au-delà de la zone de transition 612 commune entre la première et la deuxième parties 61 et 62, deux parois symétriques 66 et 67 formées par les deux parties symétriques 621 et 622 de l'ébauche 600 densifiée et ayant chacune une épaisseur e66, respectivement e67, sensiblement identique à l'épaisseur e51 ou e52 respectivement des peaux 51 ou 52 de la structure à profil aérodynamique 50.

Plus précisément, dans le mode de réalisation décrit ici, les peaux 51 et 52 présentent des épaisseurs e51 ou e52 qui s'accroissent progressivement entre la partie basse de l'aube et le sommet de l'aube tandis que les épaisseurs e66 et e67 des parois 66 et 67 s'accroissent entre le sommet de l'aube et la zone de transition 612 afin de permettre une reprise progressive des efforts par le longeron à la base de l'aube (i.e. pied d'aube).

Conformément à l'invention, la variation d'épaisseur entre les épaisseurs e51 et e52 des peaux 51 et 52 et les épaisseurs e66 et e67 des parois 66 et 67 du longeron n'excède pas 40%.

En outre, le renfort fibreux de la deuxième partie 62 comprenant les deux parois symétriques 66 et 67 et le renfort fibreux des peaux 51 et 52 de la structure à profil aérodynamique présente la même structure textile, à savoir la même nature et orientation d'armure.

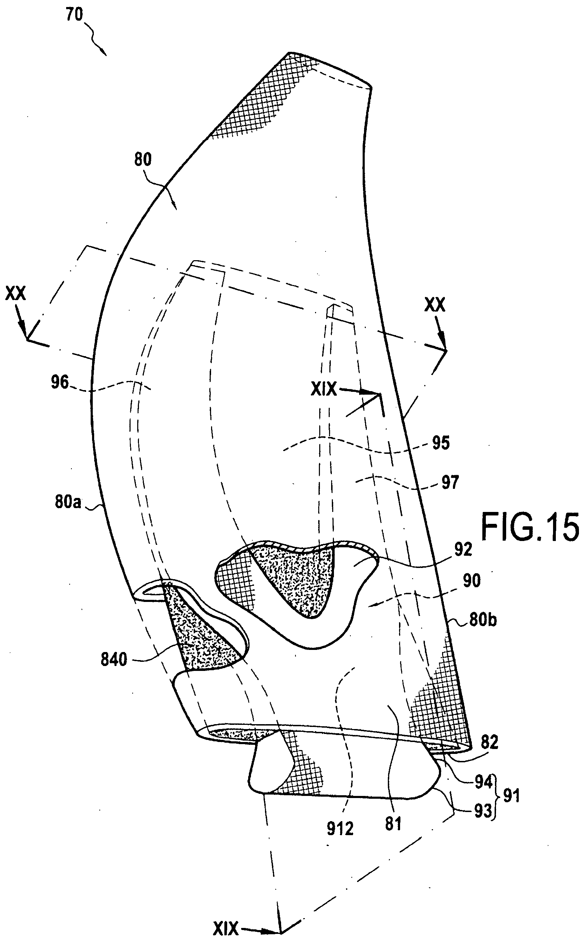

La figure 15 montre encore un autre mode de réalisation d'une pale d'hélice d'aéronef 70 selon l'invention qui diffère de celui décrit en relation avec les figures 1 à 9 en ce que le longeron 90 comporte dans sa deuxième partie 92 destinée à être disposée à l'intérieur d'une structure à profil aérodynamique 80 un évidement 95 délimitant deux branches 96 et 97 et en ce que la structure à profil aérodynamique 80 est obtenue à partir d'une ébauche fibreuse 800 correspondant au développé de la structure à profil aérodynamique 80 de la pale d'hélice 70.

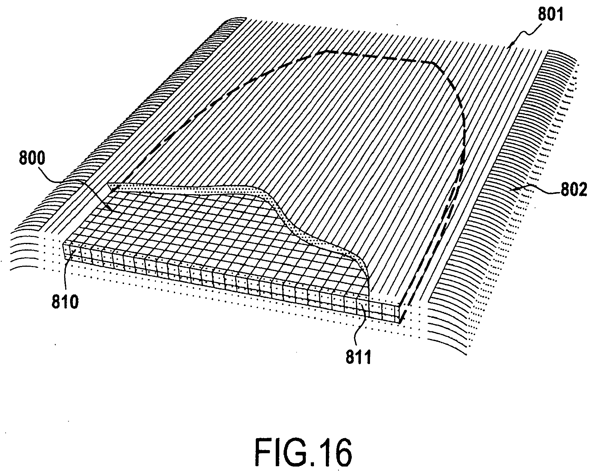

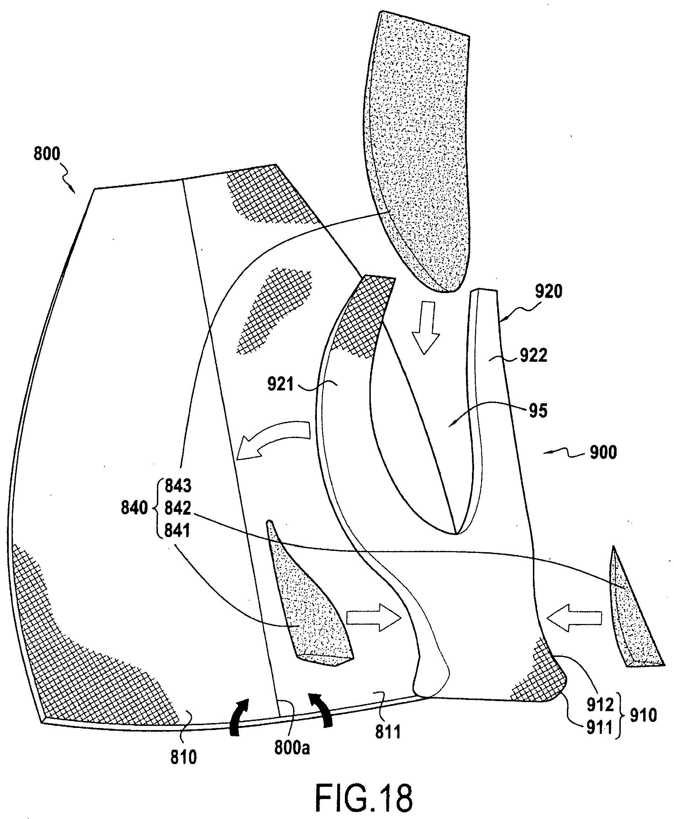

L'ébauche fibreuse 800 est obtenue, comme illustrée schématiquement sur la figure 16, par tissage 3D, par exemple de type interlock, entre des fils de chaînes 801 ou torons disposés en une pluralité de couches de plusieurs centaines de fils chacune, et des fils de trame 802. Au fur et à mesure du tissage de l'ébauche dont la largeur et éventuellement l'épaisseur varient, un certain nombre de fils de chaîne ne sont pas tissés, ce qui permet de définir le contour et l'épaisseur voulus, continûment variable, de l'ébauche 800. Une fois l'ébauche tissée, les fils de chaîne et de trame non tissés sont sectionnés de manière à obtenir l'ébauche fibreuse représentée sur la figure 18.

L'ébauche fibreuse 800 présente deux portions 810 et 811 symétriques reliées entre elles par tissage continu au niveau d'une ligne de pliage 800a destinée à former le bord d'attaque 80a de la structure à profil aérodynamique 80 de la pale d'hélice 70.

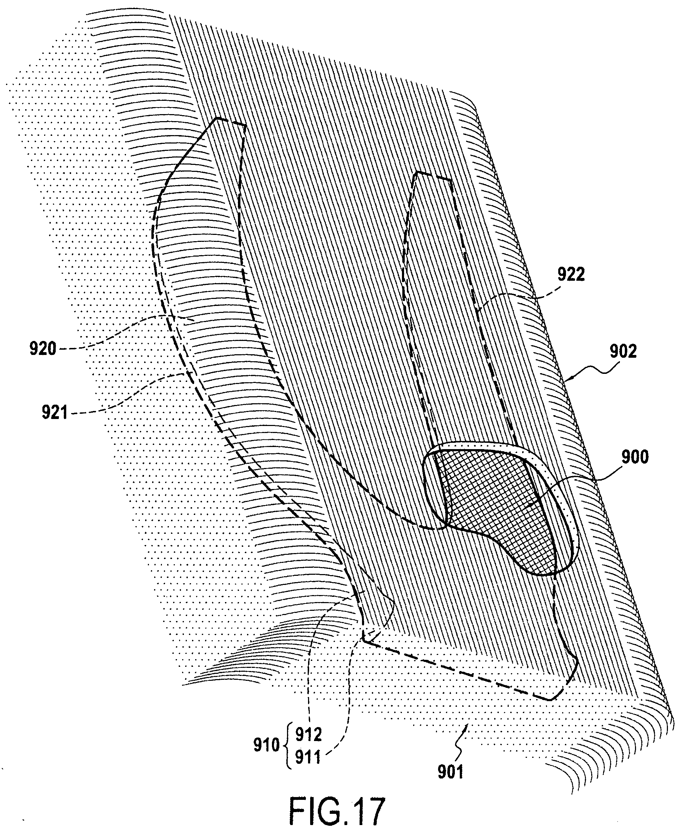

Comme représenté sur la figure 17, le longeron 90 est réalisé à partir d'une ébauche fibreuse 900 obtenue par tissage tridimensionnel de fils de chaînes 901 avec des fils de trame 902 réalisé de façon connue comme expliqué précédemment. L'ébauche fibreuse 900 comprend une première portion 910 et une deuxième portion 920, la première portion 910 comportant une partie renflée 911 et une partie d'épaisseur décroissante 912 destinées à former respectivement le pied 93 et l'échasse 94 de la pale d'hélice 70 (figure 15). L'échasse 94 est prolongée par une deuxième portion 920 destinée à former la deuxième partie 92 du longeron 90.

A la fin du tissage (figure 17), on sectionne les fils de chaîne et de trame à la limite de la masse tissée pour extraire l'ébauche 900 représentée sur la figure 18 telle qu'elle est issue du tissage 3D. La deuxième portion 920 présente un évidement central 95 (figure 18), ménagé par exemple au jet d'eau sous pression, de manière à délimiter dans celle-ci deux parties 921 et 922 destinées à former les deux branches 96 et 97 de la deuxième partie 92 du longeron 90. Lors du tissage de la deuxième portion 920 de l'ébauche 900, l'évidement 95 peut être déjà délimité en ne tissant pas les fils de chaîne et les fils de trame entre eux dans la zone centrale où doit être formée l'évidement 95.

Conformément à l'invention, la deuxième portion 920 comprenant les deux parties 921 et 922 est tissée suivant une armure et avec une orientation des fils de trame et de chaîne identiques à celles de l'ébauche fibreuse 800 constituant le renfort fibreux de la structure à profil aérodynamique 80. En outre, l'épaisseur de la deuxième portion 920 et en particulier celles de deux parties 921 et 922 sont définies pour être sensiblement égales à celles des zones des deux portions 810 et 811 de l'ébauche fibreuse 800 qui seront en regard de ces deux parties.

La deuxième portion 920 de l'ébauche fibreuse 900 ainsi qu'une pièce de conformation 840 composée de trois éléments 841, 842 et 843 formés d'un matériau rigide alvéolé de même nature que celui des éléments 141 et 142 décrits précédemment sont placés sur l'une des deux portions 810 et 811, par exemple la portion 811, l'autre portion libre, ici la portion 810, étant alors rabattue sur la portion 811. On procède ensuite à la densification de la préforme fibreuse de la structure à profil aérodynamique par voie liquide comme décrit précédemment.

Après densification de la préforme fibreuse de la structure à profil aérodynamique, on obtient telle que représentée sur la figure 15, une pale d'hélice 70 qui comprend une structure à profil aérodynamique 80 en matériau composite (renfort fibreux densifié par une matrice), un longeron 90 et une pièce de conformation 840 en matériau rigide alvéolé.

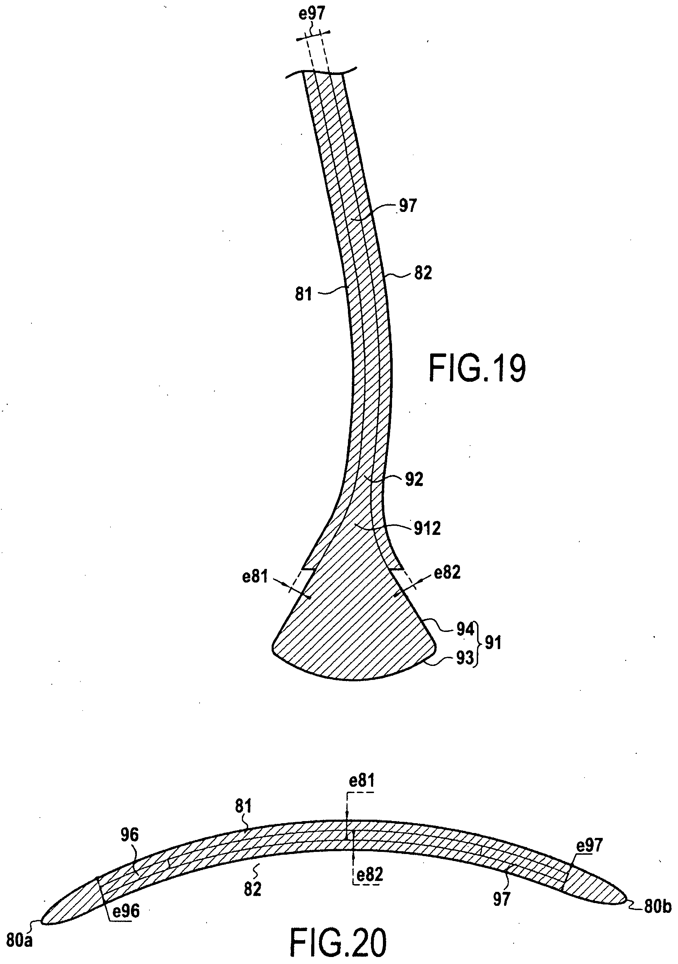

Conformément à l'invention et comme illustrée sur les figures 19 et 20, la deuxième partie 92 du longeron 90 présente dans sa majeure partie, c'est-à-dire dans sa partie située au-delà de la zone de transition 912 commune entre la première et la deuxième parties 91 et 92, deux branches 96 et 97 formées par les deux parties 921 et 922 de l'ébauche 900 densifiée et ayant chacune une épaisseur e96 sensiblement identique à l'épaisseur e81 ou e82 respectivement des peaux 81 ou 82 de la structure à profil aérodynamique 80.

Plus précisément, dans le mode de réalisation décrit ici, les peaux 81 et 82 présentent des épaisseurs e81 ou e82 qui s'accroissent progressivement entre la partie basse de l'aube et le sommet de l'aube tandis que les épaisseurs e96 et e97 des branches 96 et 97 s'accroissent entre le sommet de l'aube et la zone de transition 912 afin de permettre une reprise progressive des efforts par le longeron à la base de l'aube (i.e. pied d'aube).

Conformément à l'invention, la variation d'épaisseur entre les épaisseurs e81 et e82 des peaux 81 et 82 et les épaisseurs e96 et e97 des branches 96 et 97 du longeron n'excède pas 40%.

En outre, le renfort fibreux de la deuxième partie 92 comprenant les deux branches 96 et 97 et le renfort fibreux des peaux 81 et 82 de la structure à profil aérodynamique 80 présentent la même structure textile, à savoir la même nature et orientation d'armure.

L'espace présent entre les deux portions symétriques 66 et 67 du longeron 60 de la pale 40 illustrée en figure 10 ou l'évidement 95 présent entre les deux branches 96 et 97 du longeron 90 de la pale 70 illustrée en figure 15 peuvent être avantageusement utilisés pour y insérer des dispositifs (par exemple des conducteurs chauffant pour dégivrage) ou de canaux de circulation de fluide à l'intérieur de la pale (par exemple pour le soufflage ou le refroidissement de l'aube).

## Revendications

1. Aube (10) comprenant:
- une structure à profil aérodynamique (20) comprenant deux peaux (21, 22) en vis-à-vis obtenues par tissage tridimensionnel d'un renfort fibreux (100) densifié par une matrice,
- un longeron (30) constitué d'un renfort fibreux (200) obtenu par tissage tridimensionnel et densifié par une matrice, ledit longeron comprenant une première partie (31) s'étendant à l'extérieur de ladite structure à profil aérodynamique et destinée à être reliée à un moyeu (51) d'entraînement en rotation de l'aube et une deuxième partie disposée à l'intérieur de la structure à profil aérodynamique (20) entre les deux peaux (21, 22),
la deuxième partie (32) dudit longeron (30) comprenant une ou deux portions ayant chacune une épaisseur sensiblement similaire à celle des peaux (21, 22) de la structure à profil aérodynamique (20), et
le renfort fibreux (220) de la deuxième partie (32) du longeron (30) ayant une même armure de tissage que celle du renfort (100) des peaux (21, 22) de la structure à profil aérodynamique (20).

2. Aube selon la revendication 1, **caractérisée en ce que** la première partie (31) du longeron (30) s'étend en dessous de la deuxième partie (32) du longeron (30) suivant une épaisseur croissante.

3. Aube selon la revendication 1 ou 2, **caractérisée en ce que** la variation d'épaisseur entre l'épaisseur des peaux (21, 22) et l'épaisseur de la deuxième partie (32) du longeron (30) est inférieure à 40%.

4. Aube selon l'une quelconque des revendications 1 à 3, **caractérisée en ce que** la deuxième partie (62) du longeron (60) comprend deux portions symétriques (66, 67), l'une (66) disposée en regard d'une (51) des deux peaux de la structure à profil aérodynamique (50) et l'autre (67) disposée en regard de l'autre peau (52), chaque portion symétrique (66; 67) ayant une épaisseur sensiblement similaire à celle de la peau (51; 52) adjacente de la structure à profil aérodynamique.

5. Aube selon la revendication 4, **caractérisée en ce qu'**au moins pièce de conformation (541) en matériau rigide alvéolé est disposée entre les deux portions symétriques.

6. Aube selon la revendication 1, **caractérisée en ce que** la deuxième partie (92) du longeron (90) comporte deux branches (96, 97) espacées l'une de l'autre par un évidement central (95) et ayant chacune une épaisseur sensiblement similaire à celle des peaux (81, 82) de la structure à profil aérodynamique (80).

7. Aube selon la revendication 6, **caractérisée en ce qu'**au moins une pièce de conformation (843) en matériau rigide alvéolé est disposée dans l'évidement central (95).

8. Aube selon l'une quelconque des revendications 1 à 7, **caractérisée en ce que** la structure à profil aérodynamique (20) comprend un renfort réalisé avec des premières fibres et densifié par une première matrice et **en ce que** le longeron (30) comprend un renfort réalisé avec des deuxièmes fibres et densifié par une deuxième matrice, au moins les première et deuxième fibres ou les première et deuxième matrices étant de nature différente.

9. Aube selon l'une quelconque des revendications 1 à 7, **caractérisée en ce que** la structure à profil aérodynamique (20) et le longeron (30) comprennent un renfort en fibres de carbone densifié par une matrice carbone.

10. Procédé de fabrication d'une aube comprenant au moins:
- la réalisation d'une première ébauche fibreuse (100) d'une structure à profil aérodynamique (20) par tissage tridimensionnel de fils, ladite ébauche comprenant deux peaux (110, 111) délimitant entre elles un espace interne (104a),
- la réalisation d'une deuxième ébauche fibreuse (200) d'un longeron (30) par tissage tridimensionnel de fils, ladite deuxième ébauche (200) comprenant une première et une deuxième portions (210, 220), la deuxième portion (220) ayant une épaisseur sensiblement égale à celle des peaux (110, 111) de la première ébauche (100) et une armure identique à celle desdites peaux,
- la mise en forme de la première ébauche fibreuse (100) pour obtenir une préforme de structure à profil aérodynamique (20), ladite mise en forme comprenant la disposition de la deuxième partie (220) de la deuxième ébauche (200) dans l'espace interne (104a) entre les deux peaux (110, 111) de la première ébauche fibreuse (100),
- la densification des première et deuxième ébauches (100, 200) par une matrice pour obtenir une aube (10) comprenant une structure à profil aérodynamique (20) et un longeron (30) ayant chacun un renfort fibreux densifié par la matrice.

11. Procédé selon la revendication 10, **caractérisé en ce que**, lors de la réalisation de la deuxième ébauche fibreuse (600) du longeron (60), la deuxième portion (620) de ladite deuxième ébauche fibreuse (600) est divisée en deux parties symétriques (621, 622) dans le sens de l'épaisseur de ladite deuxième portion (620), chaque partie symétrique (621; 622) ayant une épaisseur sensiblement similaire à celle de la peau (510; 511) de la première ébauche fibreuse avec laquelle elle est destinée à être en regard lors de la mise en forme de la première ébauche fibreuse (500).

12. Procédé selon la revendication 11, **caractérisé en ce que**, lors de la mise en forme de la première ébauche fibreuse (500), au moins une pièce de conformation (541) en matériau rigide alvéolé est disposée entre les deux parties symétriques (621, 622) de ladite deuxième portion (620).

13. Procédé selon la revendication 10, **caractérisé en ce que**, lors de la réalisation de la deuxième ébauche fibreuse (900) du longeron (90), un évidement central (95) est ménagé dans la deuxième portion (920) de ladite deuxième ébauche fibreuse (900), ledit évidement délimitant deux parties (921, 922) espacées l'une de l'autre par l'évidement central (95) et ayant chacune une épaisseur sensiblement similaire à celle des peaux (810, 811) de la structure à profil aérodynamique (80).

14. Procédé selon la revendication 13, **caractérisé en ce que**, lors de la mise en forme de la première ébauche fibreuse, au moins une pièce de conformation (843) en matériau rigide alvéolé est disposée dans l'évidement central.

15. Procédé selon la revendication 10, **caractérisé en ce que** la première portion (210) de la deuxième ébauche fibreuse (200) comprend en outre une partie renflée (211) prolongée par une partie d'épaisseur décroissante (212) vers la deuxième portion (220) de la deuxième ébauche (200) et **en ce que** lesdites partie renflée et partie d'épaisseur décroissante (211, 212) forment respectivement, après densification, un pied et une échasse d'aube (33, 34).

16. Procédé de fabrication d'une aube comprenant au moins:
- la réalisation d'une première ébauche fibreuse (100) d'une structure à profil aérodynamique (20) par tissage tridimensionnel de fils, ladite ébauche comprenant deux peaux (110, 111) délimitant entre elles un espace interne (104a),
- la réalisation d'une deuxième ébauche fibreuse (200) d'un longeron (30) par tissage tridimensionnel de fils, ladite deuxième ébauche (200) comprenant une première et une deuxième portions (210, 220), la deuxième portion (220) ayant une épaisseur sensiblement égale à celle des peaux (110, 111) de la première ébauche (100) et une armure identique à celle desdites peaux,
- la densification de la deuxième ébauche fibreuse (200) par une première matrice,
- la mise en forme de la première ébauche fibreuse (100) pour obtenir une préforme de structure à profil aérodynamique (20), ladite mise en forme comprenant la disposition de la deuxième partie (220) de la deuxième ébauche densifiée (200) dans l'espace interne (104a) entre les deux peaux (110, 111) de la première ébauche fibreuse (100),
- la densification de la première ébauche (100) par une deuxième matrice de nature différente de celle de la première matrice pour obtenir une aube (10) comprenant une structure à profil aérodynamique (20) et un longeron (30) ayant chacun un renfort fibreux densifié par la matrice.

17. Turbopropulseur équipé d'une aube ou pale d'hélice selon l'une quelconque des revendications 1 à 9 ou fabriquée selon le procédé de l'une quelconque des revendications 10 à 16.

18. Aéronef équipé d'au moins un turbopropulseur selon la revendication 17.

## Patentansprüche

1. Schaufel (10), umfassend:
- eine Struktur mit aerodynamischem Profil (20), die zwei gegenüberliegende Außenhäute (21, 22) umfasst, welche durch dreidimensionales Weben einer durch eine Matrix verdichteten Faserverstärkung (100) erhalten werden,
- einen Längsträger (30), der von einer Faserverstärkung (200) gebildet ist, welche durch dreidimensionales Weben erhalten wird und durch eine Matrix verdichtet ist, wobei der Längsträger einen ersten Teil (31), der sich außerhalb der Struktur mit aerodynamischem Profil erstreckt und dazu bestimmt ist, mit einer Nabe (51) zum Drehantreiben der Schaufel verbunden zu werden, sowie einen zweiten Teil umfasst, der innerhalb der Struktur mit aerodynamischem Profil (20) zwischen den beiden Außenhäuten (21, 22) angeordnet ist,
wobei der zweite Teil (32) des Längsträgers (30) einen oder zwei Abschnitte umfasst, die jeweils eine Dicke aufweisen, welche mit derjenigen der Außenhäute (21, 22) der Struktur mit aerodynamischem Profil (20) im Wesentlichen vergleichbar ist, und
wobei die Faserverstärkung (220) des zweiten Teils (32) des Längsträgers (30) eine gleiche Webbindung wie die Verstärkung (100) der Außenhäute (21, 22) der Struktur mit aerodynamischem Profil (20) aufweist.

2. Schaufel nach Anspruch 1, **dadurch gekennzeichnet, dass** der erste Teil (31) des Längsträgers (30) sich unter dem zweiten Teil (32) des Längsträgers (30) mit einer zunehmenden Dicke erstreckt.

3. Schaufel nach Anspruch 1 oder 2, **dadurch gekennzeichnet, dass** die Dickenänderung zwischen der Dicke der Außenhäute (21, 22) und der Dicke des zweiten Teils (32) des Längsträgers (30) weniger als 40 % beträgt.

4. Schaufel nach einem der Ansprüche 1 bis 3, **dadurch gekennzeichnet, dass** der zweite Teil (62) des Längsträgers (60) zwei symmetrische Abschnitte (66, 67) umfasst, wobei der eine (66) gegenüber einer (51) der beiden Außenhäute der Struktur mit aerodynamischem Profil (50) angeordnet ist und der andere (67) gegenüber der anderen Außenhaut (52) angeordnet ist, wobei jeder symmetrische Abschnitt (66; 67) eine Dicke aufweist, die mit derjenigen der benachbarten Außenhaut (51; 52) der Struktur mit aerodynamischem Profil im Wesentlichen vergleichbar ist.

5. Schaufel nach Anspruch 4, **dadurch gekennzeichnet, dass** wenigstens ein Formungsteil (541) aus starrem, wabenartigem Material zwischen den beiden symmetrischen Abschnitten angeordnet ist.

6. Schaufel nach Anspruch 1, **dadurch gekennzeichnet, dass** der zweite Teil (92) des Längsträgers (90) zwei Schenkel (96, 97) umfasst, die durch eine mittlere Ausnehmung (95) voneinander beabstandet sind und die jeweils eine Dicke aufweisen, welche mit derjenigen der Außenhäute (81, 82) der Struktur mit aerodynamischem Profil (80) im Wesentlichen vergleichbar ist.

7. Schaufel nach Anspruch 6, **dadurch gekennzeichnet, dass** wenigstens ein Formungsteil (843) aus starrem, wabenartigem Material in der mittleren Ausnehmung (95) angeordnet ist.

8. Schaufel nach einem der Ansprüche 1 bis 7, **dadurch gekennzeichnet, dass** die Struktur mit aerodynamischem Profil (20) eine mit ersten Fasern ausgebildete und durch eine erste Matrix verdichtete Verstärkung umfasst und dass der Längsträger (30) eine mit zweiten Fasern ausgebildete und durch eine zweite Matrix verdichtete Verstärkung umfasst, wobei wenigstens die erste und die zweite Faser oder die erste und die zweite Matrix unterschiedlicher Art sind.

9. Schaufel nach einem der Ansprüche 1 bis 7, **dadurch gekennzeichnet, dass** die Struktur mit aerodynamischem Profil (20) und der Längsträger (30) eine durch eine Kohlenstoffmatrix verdichtete Kohlenstofffaserverstärkung umfassen.

10. Verfahren zur Herstellung einer Schaufel, das wenigstens umfasst:
- die Ausbildung eines ersten Faserrohlings (100) einer Struktur mit aerodynamischem Profil (20) durch dreidimensionales Weben von Fäden, wobei der Rohling zwei Außenhäute (110, 111), die einen Innenraum (104a) zwischen sich begrenzen, umfasst,
- die Ausbildung eines zweiten Faserrohlings (200) eines Längsträgers (30) durch dreidimensionales Weben von Fäden, wobei der zweite Rohling (200) einen ersten und einen zweiten Abschnitt (210, 220) umfasst, wobei der zweite Abschnitt (220) eine Dicke, die im Wesentlichen gleich derjenigen der Außenhäute (110, 111) des ersten Rohlings (100) ist, und eine identische Bindung wie die Außenhäute aufweist,
- das Informbringen des ersten Faserrohlings (100), um einen Vorformling einer Struktur mit aerodynamischem Profil (20) zu erhalten, wobei das Informbringen das Anordnen des zweiten Teils (220) des zweiten Rohlings (200) in dem Innenraum (104a) zwischen den beiden Außenhäuten (110, 111) des ersten Faserrohlings (100) umfasst,
- das Verdichten des ersten und des zweiten Rohlings (100, 200) durch eine Matrix, um eine Schaufel (10), die eine Struktur mit aerodynamischem Profil (20) und einen Längsträger (30) mit je einer durch die Matrix verdichteten Faserverstärkung umfasst, zu erhalten.

11. Verfahren nach Anspruch 10, **dadurch gekennzeichnet, dass** während der Ausbildung des zweiten Faserrohlings (600) des Längsträgers (60) der zweite Abschnitt (620) des zweiten Faserrohlings (600) in zwei symmetrische Teile (621, 622) in der Richtung der Dicke des zweiten Abschnitts (620) unterteilt wird, wobei jeder symmetrische Teil (621; 622) eine Dicke aufweist, die mit derjenigen der Außenhaut (510; 511) des ersten Faserrohlings, der er bei Informbringen des ersten Faserrohlings (500) gegenüberliegen soll, im Wesentlichen vergleichbar ist.

12. Verfahren nach Anspruch 11, **dadurch gekennzeichnet, dass** bei Informbringen des ersten Faserrohlings (500) wenigstens ein Formungsteil (541) aus starrem, wabenartigem Material zwischen den beiden symmetrischen Teilen (621, 622) des zweiten Abschnitts (620) angeordnet ist.

13. Verfahren nach Anspruch 10, **dadurch gekennzeichnet, dass** bei der Ausbildung des zweiten Faserrohlings (900) des Längsträgers (90) eine mittlere Ausnehmung (95) in dem zweiten Abschnitt (920) des zweiten Faserrohlings (900) ausgebildet wird, wobei die Ausnehmung zwei Teile (921, 922) begrenzt, welche durch die mittlere Ausnehmung (95) voneinander beabstandet sind und jeweils eine Dicke aufweisen, die mit derjenigen der Außenhäute (810, 811) der Struktur mit aerodynamischem Profil (80) im Wesentlichen vergleichbar ist.

14. Verfahren nach Anspruch 13, **dadurch gekennzeichnet, dass** bei Informbringen des ersten Faserrohlings wenigstens ein Formungsteil (843) aus starrem, wabenartigem Material in der mittleren Ausnehmung angeordnet ist.

15. Verfahren nach Anspruch 10, **dadurch gekennzeichnet, dass** der erste Abschnitt (210) des zweiten Faserrohlings (200) ferner einen bauchigen Teil (211), der durch einen Teil mit abnehmender Dicke (212) in Richtung des zweiten Abschnitts (220) des zweiten Rohlings (200) fortgesetzt ist, umfasst und dass der bauchige Teil und der Teil mit abnehmender Dicke (211,212) nach Verdichtung einen Fuß bzw. eine Schaufelstelze (33, 34) bilden.

16. Verfahren zur Herstellung einer Schaufel, das wenigstens umfasst:
- die Ausbildung eines ersten Faserrohlings (100) einer Struktur mit aerodynamischem Profil (20) durch dreidimensionales Weben von Fäden, wobei der Rohling zwei Außenhäute (110, 111), die zwischen sich einen Innenraum (104a) begrenzen, umfasst,
- die Ausbildung eines zweiten Faserrohlings (200) eines Längsträgers (30) durch dreidimensionales Weben von Fäden, wobei der zweite Rohling (200) einen ersten und einen zweiten Abschnitt (210, 220) umfasst, wobei der zweite Abschnitt (220) eine Dicke, die im Wesentlichen gleich derjenigen der Außenhäute (110, 111) des ersten Rohlings (100) ist, und eine identische Bindung wie die Außenhäute aufweist,
- das Verdichten des zweiten Faserrohlings (200) durch eine erste Matrix,
- das Informbringen des ersten Faserrohlings (100), um einen Vorformling einer Struktur mit aerodynamischem Profil (20) zu erhalten, wobei das Informbringen das Anordnen des zweiten Teils (220) des verdichteten zweiten Rohlings (200) in dem Innenraum (104a) zwischen den beiden Außenhäuten (110, 111) des ersten Faserrohlings (100) umfasst,
- das Verdichten des ersten Rohlings (100) durch eine zweite Matrix mit einer von derjenigen der ersten Matrix abweichenden Art, um eine Schaufel (10), die eine Struktur mit aerodynamischem Profil (20) und einen Längsträger (30) mit je einer durch die Matrix verdichteten Faserverstärkung umfasst, zu erhalten.

17. Turboprop-Triebwerk, das mit einer Schaufel oder einem Propellerblatt nach einem der Ansprüche 1 bis 9 oder hergestellt gemäß dem Verfahren nach einem der Ansprüche 10 bis 16, ausgestattet ist.

18. Luftfahrzeug, das mit wenigstens einem Turboprop-Triebwerk nach Anspruch 17 ausgestattet ist.

## Claims

1. A blade (10) comprising:
- a structure with aerodynamic profile (20) comprising two opposite skins (21, 22) obtained by three-dimensional weaving of a fibrous reinforcement (100) densified by a matrix,
- a longeron (30) comprising a fibrous reinforcement (200) obtained by three-dimensional weaving and densified by a matrix, said longeron comprising a first part (31) extending outside said structure with aerodynamic profile and designed to be connected to a (51) drive hub in rotation of the blade and a second part arranged inside the structure with aerodynamic profile (20) between the two skins (21, 22),
the second part (32) of said longeron (30) comprising one of two portions each having a thickness substantially similar to that of the skins (21, 22) of the structure with aerodynamic profile (20), and
the fibrous reinforcement (220) of the second part (32) of the longeron (30) having the same weaving armour as that of the reinforcement (100) of the skins (21, 22) of the structure with aerodynamic profile (20).

2. The blade according to Claim 1, **characterised in that** the first part (31) of the longeron (30) extends underneath the second part (32) of the longeron (30) in increasing thickness.

3. The blade according to Claim 1 or 2, **characterised in that** the variation in thickness between the thickness of the skins (21, 22) and the thickness of the second part (32) of the longeron (30) is less than 40%.

4. The blade according to any one of Claims 1 to 3, **characterised in that** the second part (62) of the longeron (60) comprises two symmetrical portions (66, 67), one (66) arranged opposite to one (51) of the two skins of the structure with aerodynamic profile (50) and the other (67) arranged opposite to the other skin (52), each symmetrical portion (66; 67) having a thickness substantially similar to that of the skin (51; 52) adjacent to the structure with aerodynamic profile.

5. The blade according to Claim 4, **characterised in that** at least one moulded piece (541) made of rigid cellular material is arranged between the two symmetrical portions.

6. The blade according to Claim 1, **characterised in that** the second part (92) of the longeron (90) comprises two legs (96, 97) spaced apart from each other by a central recess (95) and each having a thickness substantially similar to that of the skins (81, 82) of the structure with aerodynamic profile (80).

7. The blade according to Claim 6, **characterised in that** at least one moulded piece (843) made of rigid cellular material is arranged in the central recess (95).

8. The blade according to any one of Claims 1 to 7, **characterised in that** the structure with aerodynamic profile (20) comprises a reinforcement made with first fibres and densified by a first matrix and **in that** the longeron (30) comprises a reinforcement made with seconds fibres and densified by a second matrix, at least the first and second fibres or the first and second matrices being different in kind.

9. The blade according to any one of Claims 1 to 7, **characterised in that** the structure with aerodynamic profile (20) and the longeron (30) comprise a reinforcement of carbon fibres densified by a matrix carbon.

10. A manufacturing process of a blade comprising at least:
- manufacture of a first fibrous preform (100) of a structure with aerodynamic profile (20) by three-dimensional weaving of threads, said preform comprising two skins (110, 111) delimiting between them an internal space (104a),
- manufacture of a second fibrous preform (200) of a longeron (30) by three-dimensional weaving of threads, said second preform (200) comprising a first and a second portions (210, 220), the second portion (220) having a thickness substantially equal to that of the skins (110, 111) of the first preform (100) and armour identical to that of said skins,
- forming of the first fibrous preform (100) to produce a preform of structure with aerodynamic profile (20), said forming comprising the arranging of the second part (220) of the second preform (200) in the internal space (104a) between the two skins (110, 111) of the first fibrous preform (100),
- densification of the first and second preforms (100, 200) by a matrix to produce a blade (10) comprising a structure with aerodynamic profile (20) and a longeron (30), each having a fibrous reinforcement densified by the matrix.

11. The process according to Claim 10, **characterised in that**, during manufacture of the second fibrous preform (600) of the longeron (60), the second portion (620) of said second fibrous preform (600) is divided into two symmetrical parts (621, 622) in the direction of the thickness of said second portion (620), each symmetrical part (621; 622) having a thickness substantially similar to that of the skin (510; 511) of the first fibrous preform with which it is designed to be opposite during forming of the first fibrous preform (500).

12. The process according to Claim 11, **characterised in that**, during forming of the first fibrous preform (500), at least one moulded piece (541) made of rigid cellular material is arranged between the two symmetrical parts (621, 622) of said second portion (620).

13. The process according to Claim 10, **characterised in that**, during manufacture of the second fibrous preform (900) of the longeron (90), a central recess (95) is made in the second portion (920) of said second fibrous preform (900), said recess delimiting two parts (921, 922) spaced apart from each other by the central recess (95) and each having a thickness substantially similar to that of the skins (810, 811) of the structure with aerodynamic profile (80).

14. The process according to Claim 13, **characterised in that**, during forming of the first fibrous preform, at least one moulded piece (843) made of rigid cellular material is arranged in the central recess.

15. The process according to Claim 10, **characterised in that** the first portion (210) of the second fibrous preform (200) further comprises a thickened part (211) extended by a part of decreasing thickness (212) towards the second portion (220) of the second preform (200) and **in that** said thickened part and part of decreasing thickness (211, 212) form respectively, after densification, a foot and a blade stilt (33, 34).

16. A manufacturing process of a blade comprising at least :
- manufacture of a first fibrous preform (100) of a structure with aerodynamic profile (20) by three-dimensional weaving of threads, said preform comprising two skins (110, 111) delimiting between them an internal space (104a),
- manufacture of a second fibrous preform (200) of a longeron (30) by three-dimensional weaving of threads, said second preform (200) comprising a first and a second portions (210, 220), the second portion (220) having a thickness substantially equal to that of the skins (110, 111) of the first preform (100) and armour identical to that of said skins,
- densification of the second fibrous preform (200) by a first matrix,
- forming of the first fibrous preform (100) to produce a preform of structure with aerodynamic profile (20), said forming comprising the arranging of the second part (220) of the second preform (200) in the internal space (104a) between the two skins (110, 111) of the first fibrous preform (100),
- densification of the first and second preforms (100, 200) by a second matrix to produce a blade (10) comprising a structure with aerodynamic profile (20) and a longeron (30), each having a fibrous reinforcement densified by the matrix.

17. A turboprop equipped with a blade or propeller blade according to any one of Claims 1 to 9 or manufactured according to the process of any one of Claims 10 to 16.

18. An aircraft equipped with at least one turboprop according to Claim 17.
